# EUROPÄISCHE PATENTSCHRIFT

(11) **EP 3 837 504 B1**
(45) Veröffentlichungstag und Bekanntmachung des Hinweises auf die Patenterteilung: **03.05.2023**
(21) Anmeldenummer: 19748517.0
(22) Anmeldetag: 30.07.2019
(51) Int. Cl.: G01F 1/84, G01N 9/00, G01N 11/16, H01F 5/00

(54) **MESSAUFNEHMER EINES MESSGERÄTS UND MESSGERÄT**
TRANSMITTER OF A MEASURING DEVICE AND MEASURING DEVICE
TRANSMETTEUR D'UN DISPOSITIF DE MESURE ET DISPOSITIF DE MESURE

(30) Priorität: 16.08.2018 DE 102018119942
(43) Veröffentlichungstag der Anmeldung: 23.06.2021
(73) Patentinhaber: Endress + Hauser Flowtec AG, 4153 Reinach (CH)
(72) Erfinder: RAMSEYER, Severin, 4142 Münchenstein (CH); SCHWENTER, Benjamin, 4147 Aesch (CH); WERNER, Marc, 79639 Grenzach-Wyhlen (DE); HOLLINGER, Claude, 4147 Aesch (CH); STUCKI, Martin, 4133 Pratteln (CH)
(74) Vertreter: Waselikowski, Stefan
(86) Internationale Anmeldenummer: PCT/EP2019/070467
(87) Internationale Veröffentlichungsnummer: WO 2020/035302

(56) Entgegenhaltungen:
- DE-A1-102015 120 087
- DE-U1-202017 006 709
- US-A1- 2005 284 210
- US-A1- 2008 143 194
- US-A1- 2012 182 027
- US-A1- 2013 099 729

## Beschreibung

Bei einem Messgerät, mittels welchem eine Dichte eines Mediums und/oder ein Massendurchfluss eines durch mindestens ein Messrohr des Messgeräts geleitetes Medium ermittelt werden soll, können dem Messrohr aufgeprägte Schwingungen zur Messung der Dichte bzw. des Massedurchflusses herangezogen werden.

Zur Messung der Schwingungen werden üblicherweise Sensoren mit jeweils einer Spulenvorrichtung und einer Magnetvorrichtung eingesetzt, wobei die Messrohrschwingungen eine Relativbewegung zwischen der Spulenvorrichtung und der Magnetvorrichtung verursachen, so dass in einer Spule der Spulenvorrichtung eine elektrische Spannung induziert wird.

Ein solches Messgerät ist beispielsweise in der DE102015120087A1 offenbart, wobei eine Spulenvorrichtung Planarspulen umfasst, welche zumindest abschnittsweise spiralförmig ausgebildet sind. In einer Variante weist eine Planarspule eine Rechteckform mit einer Dreiviertelwindung auf, an welche Dreiviertelwindung in einem Zentralbereich ein spiralförmiger Abschnitt angehängt ist. Ein den Zentralbreich durchdringendes Magnetfeld muss, um eine elektrische Spannung im spiralförmigen Abschnitt zu induzieren, eine Resonanzbedingung des spiralförmigen Abschnitts erfüllen. Messrohrschwingungen können somit in einem engen Schwingungsfrequenzbereich erfasst werden. In einer anderen Variante ist eine Planarspule mehrschichtig und kreisförmig aufgebaut. Es hat sich gezeigt, dass kreisförmige Spulen einfach zu fertigen sind, aber eine geringe Sensitivität eines Sensors hinsichtlich der erwähnten Messrohrschwingungen mit sich bringen.

Als Aufgabe der Erfindung kann es daher gesehen werden, einen Messaufnehmer mit einer Spulenvorrichtung sowie ein Messgerät vorzuschlagen, mittels welchen eine bessere Sensitivität hinsichtlich Messrohrschwingungen erreicht wird.

Die Aufgabe wird gelöst durch einen Messaufnehmer gemäß dem unabhängigen Anspruch 1, sowie durch ein Messgerät gemäß dem unabhängigen Anspruch 15.

Ein erfindungsgemäßer Messaufnehmer eines Messgeräts zum Erfassen eines Massedurchflusses oder einer Dichte eines durch mindestens ein Messrohr des Messaufnehmers strömenden Mediums, umfasst:
das mindestens eine Messrohr mit einem Einlauf und einem Auslauf, welches dazu eingerichtet ist, das Medium zwischen Einlauf und Auslauf zu führen;
mindestens einen Erreger, welcher dazu eingerichtet ist, das mindestens eine Messrohr zu Schwingungen anzuregen; und mindestens zwei Sensoren, welche dazu eingerichtet sind, die Auslenkung der Schwingungen mindestens eines Messrohrs zu erfassen,
wobei der Erreger sowie die Sensoren jeweils eine Spulenvorrichtung und jeweils eine Magnetvorrichtung aufweisen, wobei die Magnetvorrichtungen relativ zur jeweiligen Spulenvorrichtung bewegbar sind, und wobei die Magnetvorrichtung und die Spulenvorrichtung eines Erregers bzw. Sensors mittels magnetischer Felder miteinander wechselwirken,
wobei der Messaufnehmer einen Trägerkörper aufweist, welcher Trägerkörper dazu eingerichtet ist, das mindestens eine Messrohr zu halten,
wobei die Sensoren jeweils eine Spulenvorrichtung aufweisen,
wobei die Spulenvorrichtung umfasst:
   Eine Leiterplatte mit mindestens einer Leiterplattenschicht, wobei jede Leiterplattenschicht eine erste Seitenfläche und zur ersten Seitenfläche planparallele zweite Seitenfläche aufweist,
   mindestens eine Spule, wobei die Spule zumindest abschnittsweise mittels einer elektrisch leitfähigen Leiterbahn ausgebildet ist, wobei die Spule auf der ersten Seitenfläche und/oder zweiten Seitenfläche einer Leiterplattenschicht angeordnet ist,
   wobei die mindestens eine Spule jeweils ein erstes Spulenende und jeweils ein zweites Spulenende aufweist,
   wobei die mindestens eine Spule jeweils einen Windungsbereich und einen Zentralbereich ohne Windungen aufweist, wobei der Zentralbereich einer Spule eine Rechteckform mit einer ersten Seite und mit einer zweiten Seite aufweist, wobei die erste Seite eine erste Seitenlänge aufweist, und wobei die zweite Seite eine zweite Seitenlänge aufweist, wobei die Rechteckform des Zentralbereichs eine zur ersten Seite gehörige erste Seitenhalbierende sowie eine zur zweiten Seite gehörige zweite Seitenhalbierende aufweist,
   wobei die elektrische Leiterbahn eine Leiterbahnbreite von mindestens 30 Mikrometer aufweist,
   wobei die Spule dazu eingerichtet ist, ein zeitlich variierendes Magnetfeld erzeugt durch eine Relativbewegung eines Magnets einer Magnetvorrichtung des Messaufnehmers zu erfassen,
   dadurch gekennzeichnet,
   dass ein Verhältnis von erster Seitenlänge zu zweiter Seitenlänge größer als 2 und insbesondere größer als 3 und bevorzugt größer als 3.75 ist,
   wobei eine Messrohrschwingungsauslenkung eine Schwingungsrichtung parallel zur zweiten Seite der Rechteckform des Zentralbereichs aufweist,
   Durch Einrichtung einer Rechteckform mit einer langen Seite und einer kurzen Seite kann eine Bewegung eines Magnets entlang der kurzen Seite sehr präzise registriert und gemessen werden, insbesondere wenn der Magnet entlang der ersten Seite eine Ausdehnung im Bereich der ersten Seitenlänge aufweist.

Dann reicht bereits eine im Vergleich zu herkömmlichen Spulenvorrichtungen kleine Bewegung des Magnets aus, um eine nennenswerte Änderung eines magnetischen Flusses durch die Spule und somit eine Induktion einer elektrischen Spannung in der Spule zu verursachen.

Durch Orientierung der Spulenvorrichtung dergestalt, dass die Schwingungsrichtung des mindestens einen zugehörigen Messrohrs parallel zur kurzen zweiten Seite der Rechteckform des Zentralbereichs verläuft, weist die Spulenvorrichtung eine erhöhte Empfindlichkeit gegenüber Relativbewegungen der Magnetvorrichtung auf.

In einer Ausgestaltung weist die Leiterbahn eine Leiterbahnmittenlinie auf,
wobei benachbarte Spulenwindungen bzgl. der Leiterbahnmittenlinie einen Windungsabstand aufweisen,
wobei der Windungsabstand um einen Faktor F kleiner ist als ein Zweifaches der Leiterbahnbreite,
wobei F mindestens 1, und insbesondere mindestens 1.2 und bevorzugt mindestens 1.4 ist.

Auf diese Weise lässt sich eine Planarspule besonders dicht packen und eine Empfindlichkeit gegenüber Änderungen eines durch die Spule hindurchtretenden magnetischen Felds erhöhen.

In einer Ausgestaltung wobei eine Außenkontur des Windungsbereichs eine Rechteckform aufweist.

In einer Ausgestaltung weist die mindestens eine Spule jeweils mindestens 4, und insbesondere mindestens 5 und bevorzugt mindestens 6 Windungen auf,
und/oder wobei eine Gesamtzahl von Windungen der mindestens einen Spule mindestens 65, und insbesondere mindestens 70 und bevorzugt mindestens 72 ist.

Durch Übereinanderschichten mehrerer Planarspulen lässt sich eine Empfindlichkeit gegenüber Änderungen eines durch die Spulen hindurchtretenden magnetischen Felds erhöhen.

In einer Ausgestaltung weisen eine Mehrzahl Leiterplattenschichten jeweils eine Spule mit jeweils einem ersten Spulenende und jeweils einem zweiten Spulenende auf,
wobei die Spulen seriell und/oder parallel zueinander verschaltet sind,
wobei die Spulen verschiedener Leiterplattenschichten bei Anlegen einer elektrischen Gleichspannung konstruktiv interferierende Magnetfelder erzeugen.

Durch Übereinanderschichten mehrerer Planarspulen lässt sich eine Empfindlichkeit gegenüber Änderungen eines durch die Spulen hindurchtretenden magnetischen Felds erhöhen.

In einer Ausgestaltung sind die ersten Spulenenden mittels einer ersten Durchkontaktierung verbunden, und wobei die zweiten Spulenenden mittels einer zweiten Durchkontaktierung verbunden sind,
oder wobei benachbarte Spulen mittels jeweils einem ihrer Spulenenden über jeweils eine Durchkontaktierung verbunden sind, wobei jeweils ein Ende von äußeren Spulen mit jeweils einem Kontaktierungselement verbunden ist.

In einer Ausgestaltung ist die erste Seitenlänge mindestens 3 Millimeter und insbesondere mindestens 4 Millimeter und bevorzugt mindestens 5 Millimeter ist und/oder die erste Seitenlänge höchstens 20 Millimeter und insbesondere höchstens 15 Millimeter und bevorzugt höchstens 12 Millimeter ist,
und/oder
wobei die zweite Seitenlänge mindestens 0.3 Millimeter und insbesondere mindestens 0.5 Millimeter und bevorzugt mindestens 1 Millimeter ist und/oder welche höchstens 5 Millimeter und insbesondere höchstens 4 Millimeter und bevorzugt höchstens 3 Millimeter ist.

Größere geometrische Spulenabmessungen verbessern ein Signal/Rauschen-Verhältnis, falls ein zur Induktion elektrischer Felder in der Spule verwendeter Magnet bzgl. der ersten Seite ähnliche Abmessungen aufweist. Ein Magnet darf jedoch nicht zu schwer werden, um Messrohrschwingungen nicht zu sehr zu beeinflussen. Ein Fachmann mit Erfahrung im Bau erfindungsgemäßer Messaufnehmer bzw. Messgeräte kann maximale geometrische Abmessungen eines solchen Magnets abschätzen und daraus Obergrenzen für die erste Seite bzw. zweite Seite der Spule ableiten.

Die Messung eines Durchflusses des Mediums durch das Messrohr kann dabei durch das Coriolis-Messprinzip bewerkstelligt werden.

In einer Ausgestaltung weist die Magnetvorrichtung eines Sensors oder Erregers an mindestens einem Messrohr mindestens einen angebrachten Magnet mit mindestens einer der Spulenvorrichtung zugewandten Magnetseitenfläche auf, wobei die Magnetseitenfläche durch zwei sich gegenüberstehende erste Magnetkanten und zwei sich gegenüberstehende zweite Magnetkanten begrenzt ist,
wobei bei einem Messrohr in Ruheposition die Magnetseitenfläche in einer Projektion auf eine erste Seitenfläche einer Leiterplattenschicht die zweiten Magnetkanten entlang einer Schwingungsrichtung des Messrohrs parallel zur zweiten Seite in den Zentralbereich hineinragen, wobei eine der zweiten Seitenhalbierenden zugewandte erste Magnetkante von der zweiten Seitenhalbierenden beabstandet ist, wobei das Messrohr dazu eingerichtet ist, mit einer Schwingungsamplitude zu schwingen, wobei die Beabstandung größer als eine halbe Schwingungsamplitude ist,
wobei die der zweiten Seitenhalbierenden zugewandte erste Magnetkante insbesondere parallel zur zweiten Seitenhalbierenden verläuft.

In einer Ausgestaltung ist die Magnetseitenfläche rechteckig.

In einer Ausgestaltung überdeckt die zweite Magnetkante bei einem Messrohr in Ruheposition den Windungsbereich entlang der zweiten Magnetkante vollständig.

Dadurch wird eine Wechselwirkung zwischen Magnet und Spulenvorrichtung verbessert.

In einer Ausgestaltung ist eine Länge der ersten Magnetkante mindestens 5% und insbesondere mindestens 10% und bevorzugt mindestens 20% kleiner ist als die erste Seitenlänge,
oder wobei eine Länge der ersten Magnetkante mindestens 50 Mikrometer und insbesondere mindestens 75 Mikrometer und bevorzugt mindestens 100 Mikrometer kleiner ist als die erste Seitenlänge,
und wobei die der zweiten Seitenhalbierenden zugewandte erste Magnetkante in der Projektion in einer Richtung parallel zur zweiten Seitenhalbierenden vom Windungsbereich beabstandet ist.

Es ist von Vorteil, den Magnet bezüglich der ersten Seitenhalbierenden in guter Näherung mittig zu positionieren.

In einer Ausgestaltung steht die Magnetseitenfläche senkrecht zu einer Spulenachse und weist zur Leiterplatte einen Abstand von mindestens 20 Mikrometer und insbesondere mindestens 40 Mikrometer und bevorzugt mindestens 50 Mikrometer auf, und/oder wobei
wobei die Magnetseitenfläche zur Leiterplatte einen Abstand von höchstens 200 Mikrometer und insbesondere höchstens 150 Mikrometer und bevorzugt höchstens 120 Mikrometer aufweist.

Ein geringer Abstand der Magnetseitenfläche zur Spulenvorrichtung erhöht die Empfindlichkeit der Spulenvorrichtung gegenüber Bewegungen des Magnets. Ein Mindestabstand zur Spulenvorrichtung vermindert eine Wahrscheinlichkeit einer Zerstörung der Spulenvorrichtung bei Montage des Messaufnehmers.

In einer Ausgestaltung bildet der mindestens an einem Messrohr angeordnete Magnet eine Ringform mit einem geschlossenen Ende und einem offenen Ende aus, wobei das offene Ende dazu eingerichtet ist, eine zugehörige Spulenvorrichtung zu umgreifen und die Spulenvorrichtung mit einem parallel zu einer Spulenachse verlaufenden Magnetfeld zu beaufschlagen.

Auf diese Weise lassen sich magnetische Feldlinien des Magnets in guter Näherung räumlich homogen ausgestalten und auf den Zentralbereich und Windungsbereich konzentrieren und somit eine Empfindlichkeit der Spulenvorrichtung gegenüber Relativbewegungen des Magnets erhöhen.

In einer Ausgestaltung weist der Messaufnehmer zumindest ein Paar Messrohre auf, wobei die Messrohre des Paars dazu eingerichtet sind, gegeneinander zu schwingen,
wobei zumindest ein Sensor und/oder zumindest ein Erreger jeweils eine Spulenvorrichtung mit einer Spule sowie eine Magnetvorrichtung mit jeweils mindestens zwei Magneten aufweist,
wobei jeweils mindestens ein Magnet an jeweils einem Messrohr des Messrohrpaars befestigt ist.

Zwei in den Zentralbereich der Spule hineinragende Magnete von gegeneinander schwingenden Messrohren führen zu einer Verdoppelung der Änderung eines durch die Spulenvorrichtung hindurchtretenden magnetischen Flusses und somit zu einer besseren Empfindlichkeit der Spule gegenüber durch Messrohrschwingungen verursachte Magnetfeldänderungen.

Ein erfindungsgemäßes Messgerät umfasst einen Messaufnehmer;
eine elektronische Mess-/Betriebsschaltung, wobei die elektronische Mess-/Betriebsschaltung dazu eingerichtet ist, die Sensoren und den Erreger zu betreiben, und mittels elektrischer Verbindungen mit diesen verbunden ist,
wobei die mindestens eine elektrische Verbindung mittels einer Kabelführung zur elektronischen Mess-/Betriebsschaltung geführt ist,
wobei die elektronische Mess-/Betriebsschaltung weiter dazu eingerichtet ist, Durchflussmesswerte und/oder Dichtemesswerte zu ermitteln und bereitzustellen,
wobei das Messgerät insbesondere ein Elektronikgehäuse zum Behausen der elektronischen Mess-/Betriebsschaltung aufweist.

Im Folgenden wird die Erfindung anhand von Ausführungsbeispielen beschrieben.
Fig. 1 skizziert ein Messgerät mit einem erfindungsgemäßen Messaufnehmer.
Fig. 2 a) bis c) skizzieren eine erfindungsgemäße Spulenvorrichtung.
Fig. 3 a) und b) skizzieren einen Vergleich zwischen einer erfindungsgemäßen Spulenvorrichtung und einer Spulenvorrichtung gemäß dem Stand der Technik.
Fig. 4 und Fig. 5 skizzieren beispielhafte Ausgestaltungen erfindungsgemäßer Sensoren.
Fig. 6 skizziert beispielhafte Anordnungen von Spulenvorrichtungen und Magnetvorrichtungen bezüglich zweier Messrohre.

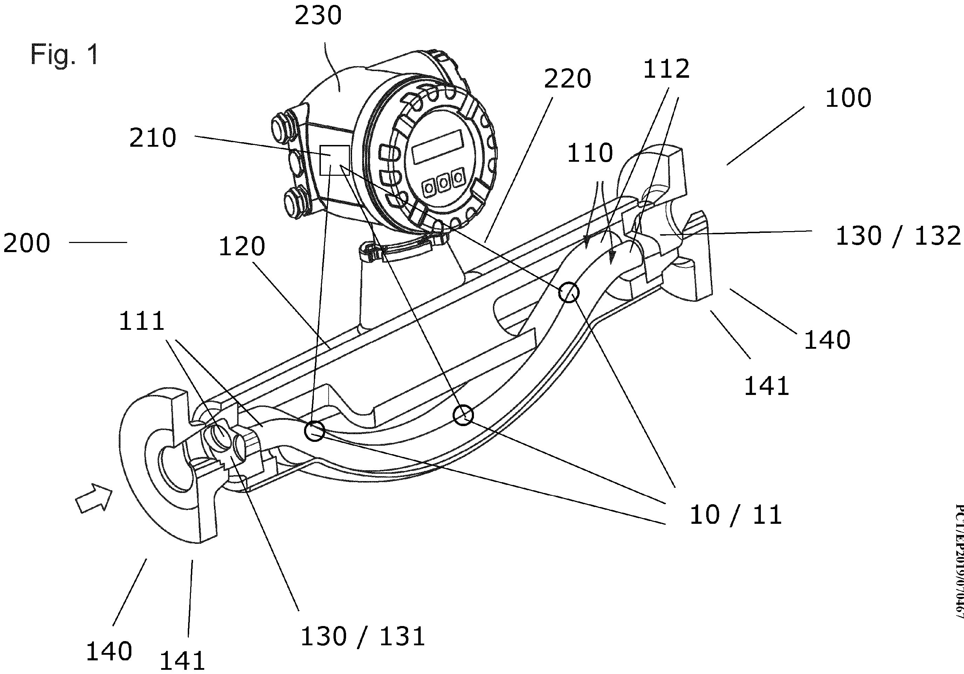

Fig. 1 skizziert ein Messgerät 200 mit einem Messaufnehmer 100, wobei der Messaufnehmer zwei Messrohre 110 aufweist, welche durch einen Trägerkörper 120 des Messaufnehmers gehalten sind. Die Messrohre münden einlaufseitig in einen ersten Sammler 131 und auslaufseitig in einen zweiten Sammler 132, wobei die Sammler 130 dazu eingerichtet sind, ein von einer Rohrleitung (nicht dargestellt) in den Messaufnehmer einströmendes Medium aufzunehmen und gleichmäßig auf die Messrohre zu verteilen. Entsprechend ist der zweite Sammler dazu eingerichtet, das aus den Messrohren herausströmende Medium aufzunehmen und in die Rohrleitung zu überführen. Der Messaufnehmer ist dabei über Prozessanschlüsse 140, insbesondere Flansche 141 an die Rohrleitung angeschlossen. Der Messaufnehmer weist einen Schwingungserreger 11 auf, welcher dazu eingerichtet ist, die Messrohre zum Schwingen anzuregen. Der Messaufnehmer weist zusätzlich zwei Schwingungssensoren 10 auf, welche dazu eingerichtet sind, die Schwingungen der Messrohre zu erfassen. Der Fachmann ist dabei nicht auf die hier genannten Anzahlen von Messrohren, Schwingungserregern und Schwingungssensoren beschränkt. Die hier gezeigte Ausführung ist in diesen Aspekten beispielhaft.

Das Messgerät weist eine elektronische Mess-/Betriebsschaltung 210 auf, welche dazu eingerichtet ist, den Schwingungserreger sowie die Schwingungssensoren zu betreiben, und Massedurchfluss- und/oder Dichtemesswerte des Mediums zu berechnen und auszugeben. Die elektronische Mess-/Betriebsschaltung ist dabei mittels elektrischer Verbindungen 220 mit den Schwingungssensoren sowie dem Schwingungserreger verbunden. Das Messgerät weist ein Elektronikgehäuse 230 auf, in welchem die elektronische Mess-/Betriebsschaltung angeordnet ist. Zur Bestimmung des Massedurchflusses nutzt das Messgerät den Coriolis-Effekt des durch die Messrohre strömenden Mediums, wobei die Strömung die Messrohrschwingungen charakteristisch beeinflusst.

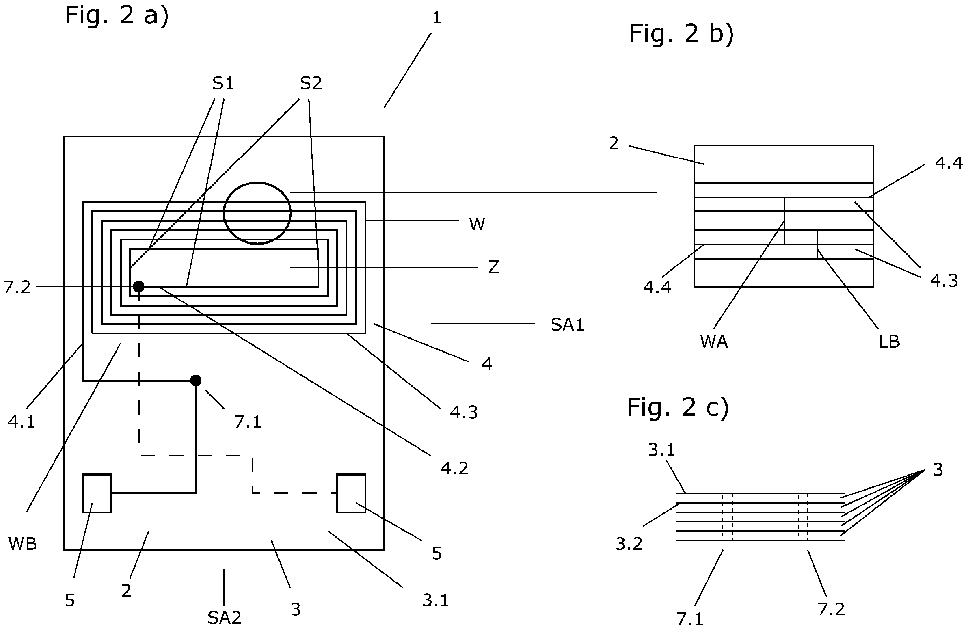

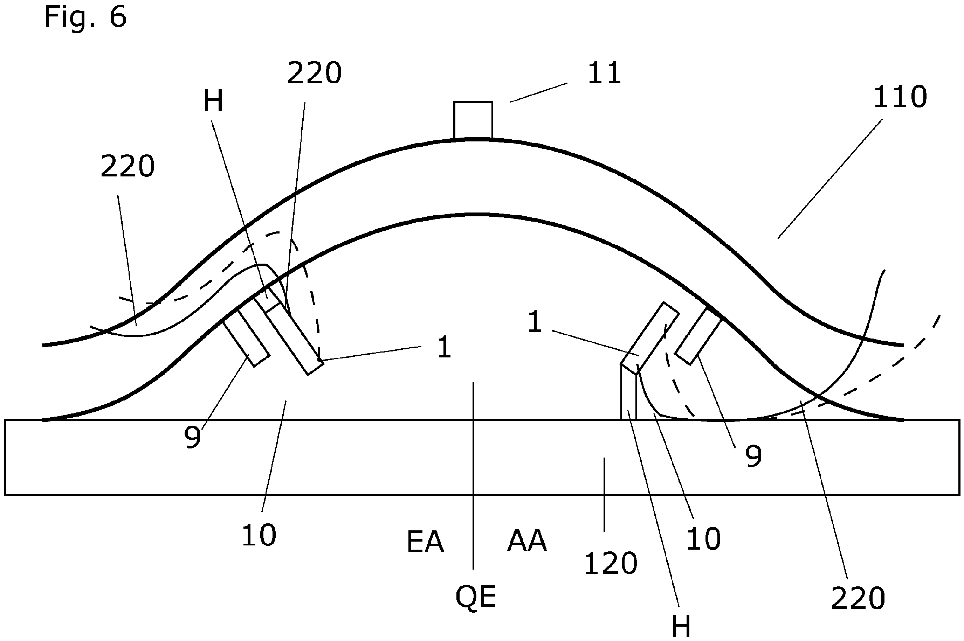

Fig. 2a) zeigt eine Aufsicht auf eine vorteilhafte erfindungsgemäße Spulenvorrichtung 1 mit einer Leiterplatte 2, welche mehrere Leiterplattenschichten 3 mit jeweils einer ersten Seitenfläche 3.1 und einer zweiten Seitenfläche 3.2 aufweist. Eine Spule 4 mit einem ersten Spulenende 4.1 und einem zweiten Spulenende 4.2 ist in Form einer elektrisch leitfähigen Leiterbahn 4.3 wie hier dargestellt auf einer erste Seitenfläche 3.1 aufgebracht. Weitere Leiterplattenschichten können weitere Spulen aufweisen, welche beispielsweise mit Durchkontaktierungen 7 miteinander verbunden sind, wobei beispielsweise eine erste Durchkontaktierung 7.1 erste Spulenenden verbindet, und wobei eine zweite Durchkontaktierung 7.2 zweite Spulenenden miteinander verbindet, was einer parallelen Verschaltung von Spulen entspräche. Alternativ kann anstatt der galvanisch parallelen Verschaltung der Spulen auch eine galvanisch serielle Verschaltung erfolgen, wobei Spulenenden benachbarter Spulen beispielsweise mittels Durchkontaktierungen verbunden sind, und wobei benachbarte Spulen jeweils einen gegenläufigen Drehsinn ihrer elektrischen Leiterbahnen aufweisen. Wichtig ist, dass die Spulen verschiedener Leiterplattenschichten bei Anlegen einer elektrischen Gleichspannung zwischen den Durchkontaktierungen konstruktiv interferierende Magnetfelder erzeugen. Alternativ kann anstatt der hier beschriebenen galvanisch parallelen Verschaltung der Spulen auch eine galvanisch serielle Verschaltung erfolgen, wobei Spulenenden benachbarter Spulen beispielsweise mittels Durchkontaktierungen verbunden sind, und wobei benachbarte Spulen jeweils einen gegenläufigen Drehsinn ihrer elektrischen Leiterbahnen aufweisen. Der Fachmann wird sich eine Spulenvorrichtung gemäß seiner Bedürfnisse einrichten. Die Spulenvorrichtung weist Kontaktierungselemente 5 auf, mittels welcher Kontaktierungselemente die Spulenvorrichtung mittels elektrischer Verbindungsleitungen 220 (siehe Fig. 1 und Fig. 6) mit einer elektronischen Mess-/Betriebsschaltung 210 (siehe Fig. 1) eines Messgeräts anschließbar ist.

Die Spule 4 weist einen Windungsbereich WB und einen Zentralbereich Z ohne Windungen auf, wobei der Zentralbereich eine Rechteckform mit zwei sich gegenüberstehenden ersten Seiten S1 und zwei sich gegenüberstehenden zweiten Seiten S2 annimmt. Die ersten Seiten S1 weisen eine erste Seitenlänge, und die zweiten Seiten weisen eine zweie Seitenlänge auf, wobei ein Verhältnis erste Seitenlänge zu zweiter Seitenlänge größer als 2, und insbesondere größer als 3 und bevorzugt größer als 3.5 ist. Die Seite, auf welcher sich das Spulenende befindet Die erste Seitenlänge ist beispielsweise mindestens 3 Millimeter und insbesondere mindestens 4 Millimeter und bevorzugt mindestens 5 Millimeter ist und/oder höchstens 20 Millimeter und insbesondere höchstens 15 Millimeter und bevorzugt höchstens 12 Millimeter, die zweite Seitenlänge ist beispielsweise mindestens 0.3 Millimeter und insbesondere mindestens 0.5 Millimeter und bevorzugt mindestens 1 Millimeter und/oder höchstens 5 Millimeter und insbesondere höchstens 4 Millimeter und bevorzugt höchstens 3 Millimeter. Größere geometrische Spulenabmessungen verbessern ein Signal/Rauschen-Verhältnis, falls ein zur Induktion elektrischer Felder in der Spule verwendeter Magnet bzgl. der ersten Seite ähnliche Abmessungen aufweist. Ein Magnet darf jedoch nicht zu schwer werden, um Messrohrschwingungen nicht zu sehr zu beeinflussen. Ein Fachmann mit Erfahrung im Bau erfindungsgemäßer Messaufnehmer bzw. Messgeräte kann maximale geometrische Abmessungen eines solchen Magnets abschätzen und daraus Obergrenzen für die erste Seite bzw. zweite Seite der Spule ableiten.

Eine erfindungsgemäße Spule weist dabei zumindest 4 Windungen und bevorzugt mindestens wie hier dargestellt 6 Windungen auf.

Fig. 2 b) zeigt einen vergrößerten Ausschnitt auf den Windungsbereich WB mit zwei Abschnitten benachbarter Windungen W. Bezüglich einer Leiterbahnmittenlinie 4.4 weisen die Windungen einen Windungsabstand WA auf, welcher Windungsabstand um einen Faktor F kleiner ist als ein Zweifaches der Leiterbahnbreite, wobei F mindestens 1, und insbesondere mindestens 1.2 und bevorzugt mindestens 1.4 ist. Die Leiterbahnbreite LB ist dabei weniger als 500 Mikrometer, und bevorzugt weniger als 400 Mikrometer und insbesondere weniger als 300 Mikrometer.

Wie in Fig. 2 c) dargestellt, kann eine Leiterplatte 3 mehrere Leiterplattenschichten aufweisen, wobei mehrere Leiterplattenschichten jeweils eine Spule aufweisen. Die Spulen mehrerer Leiterplattenschichten sind dabei über Durchkontaktierungen 7.1, 7.2 verbunden, so dass die Spulen verschiedener Leiterplattenschichten bei Anlegen einer elektrischen Spannung zwischen den Durchkontaktierungen konstruktiv interferierende Magnetfelder erzeugen. Beispielsweise wie hier dargestellt, kann eine erste Durchkontaktierung 7.1 erste Spulenenden 4.1 und eine zweite Durchkontaktierung 7.2 zweite Spulendenden 4.2 verschiedener Spulen miteinander verbinden. Dies entspricht einer Parallelschaltung verschiedener Spulen. Alternativ können benachbarte Spulen über benachbarte Spulenenden miteinander verbunden sein, wobei ein erstes Spulenende einer äußeren Spule mit einem Kontaktierungselement 5 verbunden ist, und wobei ein zweites Spulenende einer weiteren äußeren Spule mit einem anderen Kontaktierungselement verbunden ist, und wobei benachbarte Spulenenden mittels einer Durchkontaktierung verbunden sind. Dies entspräche einer Serienschaltung verschiedener Spulen.

Bevorzugt weist eine Spulenvorrichtung zumindest 6, und bevorzugt mindestens 8 und insbesondere mindestens 10 Spulen auf, welche mittels Leiterplattenschichten gestapelt sind. Eine Leiterplattenschicht ausbildendes Substrat ist dabei bevorzugt dünner als 200 Mikrometer und bevorzugt dünner als 150 Mikrometer. Das Substrat weist dabei beispielsweise den Werkstoff DuPont 951 auf. Die auf das Substrat aufgetragene elektrisch leitfähige Leiterbahn weist dabei beispielsweise den Werkstoff DuPont 614SR auf.

Verschiedene Spulen weisen dabei einen ohmschen Widerstand von weniger als 50 Ohm und insbesondere weniger als 40 Ohm und bevorzugt weniger als 30 Ohm auf, wobei Abweichungen der ohmschen Widerstände verschiedener Spulen kleiner als 10 Ohm, und insbesondere weniger als 5 Ohm und bevorzugt weniger als 2 Ohm sind.

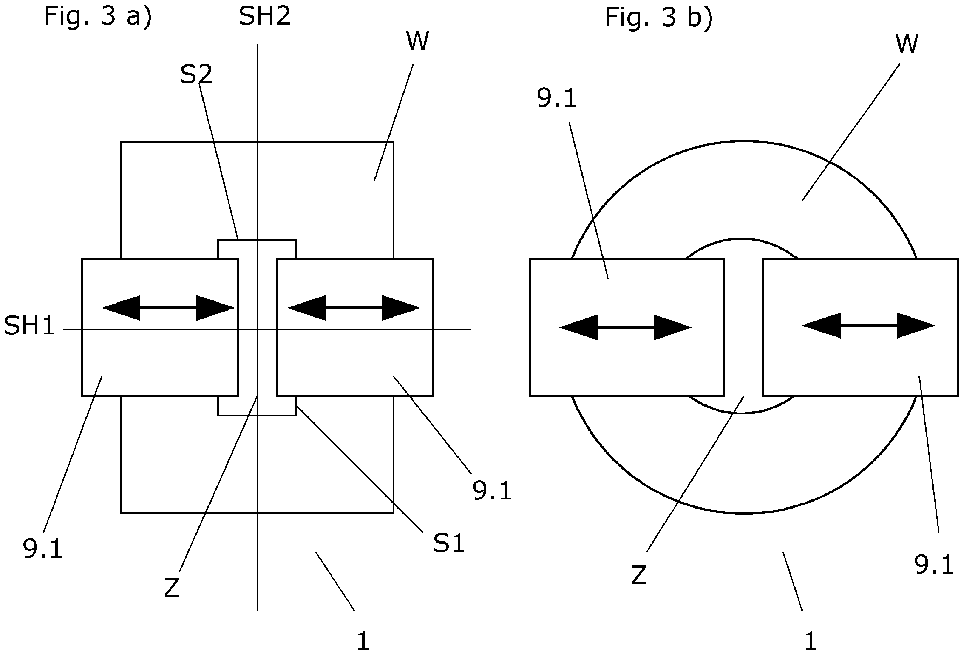

Figs. 3 a) und b) skizziert einen Vergleich zwischen einer beispielhaften erfindungsgemäßen Spulenvorrichtung 1, siehe Fig. 3 a), und einer herkömmlichen Spulenanordnung 1, siehe Fig. 3 b). In beiden Fällen wird beispielhaft eine Magnetvorrichtung 9 mit zwei Magneten 9.1 skizziert, wobei die Magnete 9.1 jeweils an einem Messrohr (nicht dargestellt) befestigt sind, und den gegenläufigen Bewegungen der Messrohre folgen. Der rechteckige Zentralbereich Z der erfindungsgemäßen Spulenvorrichtung weist eine erste Seite S1 mit einer Seitenlänge auf, welche Seitenlänge gleich einem Durchmesser des runden Zentralbereichs Z der herkömmlichen Spulenanordnung ist. Die Fläche des rechteckigen Zentralbereichs ist dabei kleiner als die Fläche des runden Zentralbereichs. Eine Messrohrschwingung mit gegebener Amplitude bei Magneten gleicher Abmessungen zu einer bezüglich der jeweiligen Fläche des Zentralbereichs im Falle des rechteckigen Zentralbereichs zu einer relativ betrachtet größeren Änderung eines durch die Spulenvorrichtung durchtretenden Magnetfelds. Somit kann also eine Dichte eines Mediums oder ein Massedurchfluss eines Mediums durch das Messrohr genauer bestimmt werden.

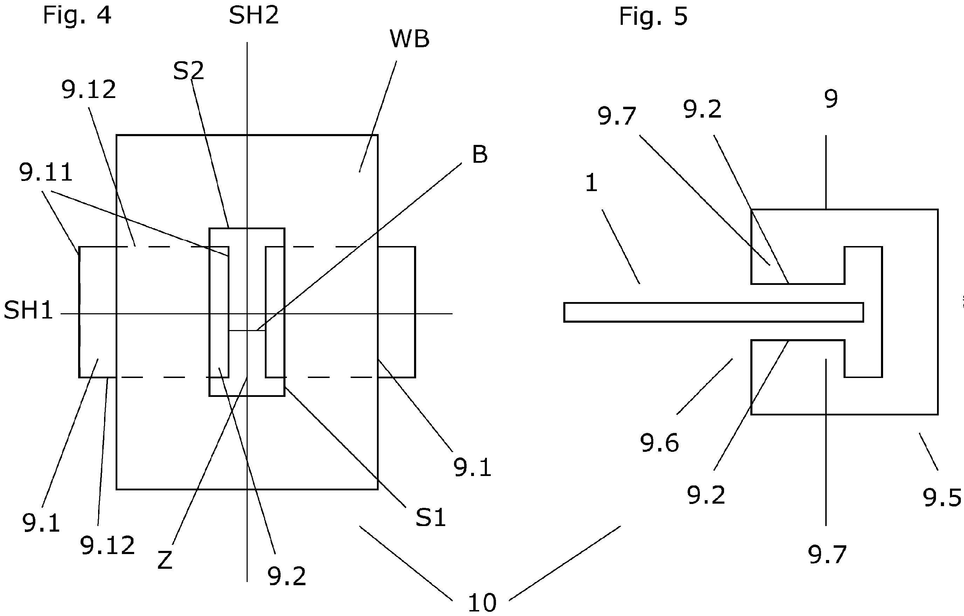

Fig. 4 skizziert eine Aufsicht auf einen Sensor mit einer Spulenvorrichtung und mit an die Spulenvorrichtung angepassten Magneten 9.1 einer Magnetvorrichtung 9, welche Magnete an jeweils einem Messrohr (der Übersichlichkeit geschuldet nicht gezeigt) angebracht sind, welche Messrohre dazu eingerichtet sind, gegenläufig zu schwingen.

Die Magnete weisen jeweils eine der Spulenvorrichtung zugewandte Magnetseitenfläche 9.2 auf, welche durch erste Magnetkanten 9.11 und zweite Magnetkanten 9.12 umrandet ist. Der Abstand einer zur zweiten Seitenhalbierenden SH2 der zweiten Seite des Zentralbereichs zugewandten ersten Magnetkante weist dabei bei einem Messrohr in Ruhelage bevorzugt einen Mindestabstand von 30 Mikrometer, und insbesondere einen Mindestabstand von 60 Mikrometer zur zweiten Seitenhalbierenden auf. Die der zweiten Seitenhalbierenden zugewandte erste Magnetkante ist dabei bevorzugt parallel zur zweiten Seitenhalbierenden. Die Magnetseitenfläche ist dabei vorteilhafterweise aber nicht notwendigerweise rechteckig. Die Magnete 9.1 überdecken dabei den Windungsbereich WB entlang ihrer zweiten Magnetkanten 9.12 bevorzugt vollständig. Die ersten Magnetkanten 9.11 weisen dabei eine kleinere Länge auf, als die ersten Seiten S1 des Zentralbereichs, wobei die Magnete bevorzugterweise im Rahmen der technischen Möglichkeiten symmetrisch bezüglich der ersten Seitenhalbierenden SH1 angeordnet sind.

Anstatt zwei Messrohre mit jeweils mindestens einem Magnet, welcher einem Sensor zugeordnet ist, kann ein Messaufnehmer auch nur ein Messrohr mit jeweils mindestens einem Magnet aufweisen, mittels welchem in der Spulenvorrichtung eine elektrische Spannung induzierbar ist.

Fig. 5 skizziert eine Seitenansicht auf eine weitere beispielhafte Spulenvorrichtung, wobei die Seitenansicht mittels einer Drehung von 90 Grad der in Fig. 4 gezeigten Ausführung um die erste Seitenhalbierende erhalten werden kann. Anstatt eines Magneten mit einer der Spulenvorrichtung zugewandten Magnetseitenfläche weist der Magnet eine Ringform auf, so dass zwei der Spulenvorrichtung zugewandte, sich gegenüberstehende Seitenflächen 9.2 die Spulenvorrichtung in einem begrenzten Bereich mit einem näherungsweise räumlich homogenen Magnetfeld beaufschlagen, wobei der Magnet die Spulenvorrichtung umgreift.

Fig. 6 skizziert eine Seitenansicht auf ein Messrohr 110 eines Messgeräts mit zwei Schwingungssensoren 10 umfassend jeweils eine erfindungsgemäße Spulenvorrichtung 1 aus einer Seitenansicht SA2, siehe Fig. 2, wobei die Schwingungssensoren jeweils mittels einer Halterung H mit dem Messrohr 110 verbunden sind und dazu eingerichtet sind, dessen Schwingungsbewegungen zu folgen, wie im einlaufseitigen Abschnitt EA gezeigt, oder die Spulenvorrichtungen sind mit dem Trägerkörper 120 mittels jeweils einer Halterung H mechanisch verbunden, wie im auslaufseitigen Abschnitt AA gezeigt. Eine Querschnittsebene QE unterteilt das mindestens eine Messrohr in den einlaufseitigen Abschnitt EA sowie den auslaufseitigen Abschnitt AA. Bei am Messrohr angeordneten Spulenvorrichtungen können durch die erfindungsgemäße Anordnung von Kontaktierungselementen elektrische Verbindungsleitungen 220 an einer dem Messrohr zugewandten Seite der Spulenvorrichtung angebunden werden. Auf eine wie im Stand der Technik nötige Anbindung einer elektrischen Leitung an einer dem Messrohr abgewandten Seite der Spulenvorrichtung, siehe gestrichelte Linie, kann somit verzichtet werden. Durch das Vermeiden von schwingfähigen Bögen der elektrischen Verbindung wird beispielsweise das Risiko eines Bruchs des Kontakts zwischen elektrischer Verbindung und Kontaktelement vermieden. Magnetvorrichtungen 9, welche wie hier skizziert an einem durch das gezeigte Messrohr verdeckten zweiten Messrohr montiert sind und dazu eingerichtet sind, dessen Schwingungsbewegungen folgen, wechselwirken im Messbetrieb mit den zugehörigen Spulenvorrichtungen über elektromagnetische Felder. Bei entgegengesetzten Messrohrschwingungen sind somit Schwingungen mittels in der Spule induzierte elektrische Spannungen erfassbar.

Falls die Spulenvorrichtungen am Trägerkörper befestigt sind, können die elektrischen Verbindungen entlang des Trägerkörpers geführt werden. In diesem Fall ermöglicht die erfindungsgemäße Anordnung von Kontaktierungselementen gleichlange elektrische Verbindungen und eine gleiche Führung der elektrischen Verbindungen.

Alternativ kann der Messaufnehmer beispielsweise nur ein Messrohr aufweisen, wobei eine Magnetvorrichtung eines jeweiligen Sensors beispielsweise am Messrohr befestigt ist, und die zugehörige Spulenvorrichtung am Trägerkörper oder umgekehrt, oder auch mehr als zwei Messrohre aufweisen. Der Fachmann wird die Spulenvorrichtungen entsprechend seiner Bedürfnisse einrichten.

Das mindestens eine Messrohr kann wie hier dargestellt zumindest einen Bogen aufweisen oder auch geradlinig verlaufen. Die Anwendbarkeit der Spulenvorrichtung ist unabhängig von einer Messrohrgeometrie.

### Bezugszeichenliste

- 1: Spulenvorrichtung
- 2: Leiterplatte
- 3: Leiterplattenschicht
- 3.1: erste Seitenfläche
- 3.2: zweite Seitenfläche
- 4: Spule
- 4.1: erstes Spulenende
- 4.2: zweites Spulenende
- 4.3: elektrisch leitfähige Leiterbahn
- 4.4: Leiterbahnmittenlinie
- 5: Kontaktierung
- 7: Durchkontaktierung
- 9: Magnetvorrichtung
- 9.1: Magnet
- 9.11: erste Magnetkante
- 9.12: zweite Magnetkante
- 9.2: Magnetseitenfläche
- 9.5: geschlossenes Ende
- 9.6: offenes Ende
- 9.7: Vorsprung
- 10: Schwingungssensor
- 11: Schwingungserreger
- 100: Messaufnehmer
- 110: Messrohr
- 111: Einlauf
- 112: Auslauf
- 120: Trägerkörper
- 130: Sammler
- 131: Erster Sammler
- 132: Zweiter Sammler
- 140: Prozessanschluss
- 141: Flansch
- 200: Messgerät
- 210: Elektronische Mess-/Betriebsschaltung
- 220: elektrische Verbindungsleitungen
- 230: Elektronikgehäuse
- LB: Leiterbahnbreite
- WB: Windungsbereich
- H: Halterung
- WA: Windungsabstand
- Z: Zentralbereich
- S1: erste Seite
- S2: zweite Seite
- SH1: erste Seitenhalbierende
- SH2: zweite Seitenhalbierende

## Patentansprüche

1. Messaufnehmer (100) eines Messgeräts (200) zum Erfassen eines Massedurchflusses oder einer Dichte eines durch mindestens ein Messrohr des Messaufnehmers strömenden Mediums, umfassend:
das mindestens eine Messrohr (110) mit einem Einlauf (111) und einem Auslauf (112), welches dazu eingerichtet ist, das Medium zwischen Einlauf und Auslauf zu führen;
mindestens einen Erreger (11), welcher dazu eingerichtet ist, das mindestens eine Messrohr zu Schwingungen anzuregen; und mindestens zwei Sensoren (10), welche dazu eingerichtet sind, die Auslenkung der Schwingungen mindestens eines Messrohrs zu erfassen,
wobei der Erreger sowie die Sensoren jeweils eine Spulenvorrichtung (1) und jeweils eine Magnetvorrichtung (9) aufweisen, wobei die Magnetvorrichtungen relativ zur jeweiligen Spulenvorrichtung bewegbar sind, und wobei die Magnetvorrichtung und die Spulenvorrichtung eines Erregers bzw. Sensors mittels magnetischer Felder miteinander wechselwirken,
wobei der Messaufnehmer einen Trägerkörper (120) aufweist, welcher Trägerkörper dazu eingerichtet ist, das mindestens eine Messrohr zu halten,
wobei die Spulenvorrichtung (1) eine Leiterplatte (2) mit mindestens einer Leiterplattenschicht (3), wobei jede Leiterplattenschicht eine erste Seitenfläche (3.1) und zur ersten Seitenfläche planparallele zweite Seitenfläche (3.2) aufweist,
wobei die Spulenvorrichtung (1) mindestens eine Spule (4) aufweist, wobei die Spule zumindest abschnittsweise mittels einer elektrisch leitfähigen Leiterbahn (4.3) ausgebildet ist, wobei die Spule auf der ersten Seitenfläche und/oder zweiten Seitenfläche einer Leiterplattenschicht angeordnet ist,
wobei die mindestens eine Spule jeweils ein erstes Spulenende (4.1) und jeweils ein zweites Spulenende (4.2) aufweist, wobei ein zumindest ein erstes Spulenende sowie zumindest ein zweites Spulenende mit jeweils einer Kontaktierung (5) verbunden ist,
wobei die mindestens eine Spule jeweils einen Windungsbereich (WB) und einen Zentralbereich (Z) ohne Windungen aufweist, wobei der Zentralbereich einer Spule eine Rechteckform mit sich gegenüberliegenden ersten Seiten (S1) und mit sich gegenüberliegenden zweiten Seiten (S2) aufweist, wobei die ersten Seiten eine erste Seitenlänge aufweisen, und wobei die zweiten Seiten jeweils eine zweite Seitenlänge aufweisen, wobei die Rechteckform des Zentralbereichs eine zur ersten Seite gehörige erste Seitenhalbierende (SH1) sowie eine zur zweiten Seite gehörige zweite Seitenhalbierende (SH2) aufweist,
wobei die elektrische Leiterbahn eine Leiterbahnbreite (LB) von mindestens 30 Mikrometer aufweist,
wobei die Spule dazu eingerichtet ist, ein zeitlich variierendes Magnetfeld erzeugt durch eine Relativbewegung eines Magnets einer Magnetvorrichtung des Messaufnehmers zu erfassen,
**dadurch gekennzeichnet, dass**
ein Verhältnis von erster Seitenlänge zu zweiter Seitenlänge größer als 3.25 und insbesondere größer als 3.5 und bevorzugt größer als 3.75 ist,
wobei eine Messrohrschwingungsauslenkung eine Schwingungsrichtung parallel zur zweiten Seite der Rechteckform des Zentralbereichs aufweist.

2. Messaufnehmer nach Anspruch 1,
wobei die Leiterbahn eine Leiterbahnmittenlinie (4.4) aufweist,
wobei benachbarte Spulenwindungen bzgl. der Leiterbahnmittenlinie einen Windungsabstand (WA) aufweisen,
wobei der Windungsabstand um einen Faktor F kleiner ist als ein Zweifaches der Leiterbahnbreite,
wobei F mindestens 1, und insbesondere mindestens 1.2 und bevorzugt mindestens 1.4 ist.

3. Messaufnehmer nach Anspruch 1 oder 2,
wobei eine Außenkontur des Windungsbereichs eine Rechteckform aufweist.

4. Messaufnehmer nach einem der vorigen Ansprüche,
wobei die mindestens eine Spule jeweils mindestens 4, und insbesondere mindestens 5 und bevorzugt mindestens 6 Windungen aufweist,
und/oder wobei eine Gesamtzahl von Windungen der mindestens einen Spule mindestens 65, und insbesondere mindestens 70 und bevorzugt mindestens 72 ist.

5. Messaufnehmer nach einem der vorigen Ansprüche,
wobei eine Mehrzahl Leiterplattenschichten (3) jeweils eine Spule mit jeweils einem ersten Spulenende und jeweils einem zweiten Spulenende aufweisen,
wobei die Spulen seriell und/oder parallel zueinander verschaltet sind,
wobei die Spulen verschiedener Leiterplattenschichten bei Anlegen einer elektrischen Gleichspannung konstruktiv interferierende Magnetfelder erzeugen.

6. Messaufnehmer nach Anspruch 5,
wobei die ersten Spulenenden mittels einer ersten Durchkontaktierung (7.1) verbunden sind, und wobei die zweiten Spulenenden mittels einer zweiten Durchkontaktierung (7.2) verbunden sind,
oder wobei benachbarte Spulen mittels jeweils einem ihrer Spulenenden über jeweils eine Durchkontaktierung verbunden sind, wobei jeweils ein Ende von äußeren Spulen mit jeweils einem Kontaktierungselement (5) verbunden ist.

7. Messaufnehmer nach einem der vorigen Ansprüche,
wobei die erste Seitenlänge mindestens 3 Millimeter und insbesondere mindestens 4 Millimeter und bevorzugt mindestens 5 Millimeter ist und/oder die erste Seitenlänge höchstens 20 Millimeter und insbesondere höchstens 15 Millimeter und bevorzugt höchstens 12 Millimeter ist,
und/oder
wobei die zweite Seitenlänge mindestens 0.3 Millimeter und insbesondere mindestens 0.5 Millimeter und bevorzugt mindestens 1 Millimeter ist und/oder welche höchstens 5 Millimeter und insbesondere höchstens 4 Millimeter und bevorzugt höchstens 3 Millimeter ist.

8. Messaufnehmer nach Anspruch 7,
wobei die Magnetvorrichtung eines Sensors oder Erregers an mindestens einem Messrohr mindestens einen angebrachten Magnet (9.1) mit mindestens einer der Spulenvorrichtung zugewandten Magnetseitenfläche aufweist, wobei die Magnetseitenfläche durch zwei sich gegenüberstehende erste Magnetkanten und zwei sich gegenüberstehende zweite Magnetkanten begrenzt ist,
wobei bei einem Messrohr in Ruheposition die Magnetseitenfläche in einer Projektion auf eine erste Seitenfläche einer Leiterplattenschicht die zweiten Magnetkanten entlang einer Schwingungsrichtung des Messrohrs parallel zur zweiten Seite in den Zentralbereich hineinragen, wobei eine der zweiten Seitenhalbierenden zugewandte erste Magnetkante von der zweiten Seitenhalbierenden beabstandet ist, wobei das Messrohr dazu eingerichtet ist, mit einer Schwingungsamplitude zu schwingen, wobei die Beabstandung (B) größer als eine halbe Schwingungsamplitude ist,
wobei die der zweiten Seitenhalbierenden zugewandte erste Magnetkante insbesondere parallel zur zweiten Seitenhalbierenden verläuft.

9. Messaufnehmer nach Anspruch 8,
wobei die Magnetseitenfläche rechteckig ist.

10. Messaufnehmer nach Anspruch 8 oder 9,
wobei die zweite Magnetkante bei einem Messrohr in Ruheposition den Windungsbereich entlang der zweiten Magnetkante vollständig überdeckt.

11. Messaufnehmer nach einem der Ansprüche 8 bis 10,
wobei eine Länge der ersten Magnetkante mindestens 5% und insbesondere mindestens 10% und bevorzugt mindestens 20% kleiner ist als die erste Seitenlänge,
oder wobei eine Länge der ersten Magnetkante mindestens 50 Mikrometer und insbesondere mindestens 75 Mikrometer und bevorzugt mindestens 100 Mikrometer kleiner ist als die erste Seitenlänge,
und wobei die der zweiten Seitenhalbierenden zugewandte erste Magnetkante in der Projektion in einer Richtung parallel zur zweiten Seitenhalbierenden vom Windungsbereich beabstandet ist.

12. Messaufnehmer nach einem der Ansprüche 8 bis 11,
wobei die Magnetseitenfläche senkrecht zu einer Spulenachse steht und zur Leiterplatte einen Abstand von mindestens 20 Mikrometer und insbesondere mindestens 40 Mikrometer und bevorzugt mindestens 50 Mikrometer aufweist, und/oder wobei
wobei die Magnetseitenfläche zur Leiterplatte einen Abstand von höchstens 200 Mikrometer und insbesondere höchstens 150 Mikrometer und bevorzugt höchstens 120 Mikrometer aufweist.

13. Messaufnehmer nach einem der Ansprüche 8 bis 12,
wobei der mindestens an einem Messrohr angeordnete Magnet eine Ringform mit einem geschlossenen Ende (9.5) und einem offenen Ende (9.6) ausbildet, wobei das offene Ende dazu eingerichtet ist, eine zugehörige Spulenvorrichtung zu umgreifen und die Spulenvorrichtung mit einem parallel zu einer Spulenachse verlaufenden Magnetfeld zu beaufschlagen.

14. Messaufnehmer nach einem der Ansprüche 8 bis 13,
wobei der Messaufnehmer zumindest ein Paar Messrohre aufweist, wobei die Messrohre des Paars dazu eingerichtet sind, gegeneinander zu schwingen,
wobei zumindest ein Sensor und/oder zumindest ein Erreger jeweils eine Spulenvorrichtung mit einer Spule sowie eine Magnetvorrichtung mit jeweils mindestens zwei Magneten aufweist,
wobei jeweils mindestens ein Magnet an jeweils einem Messrohr des Messrohrpaars befestigt ist.

15. Messgerät umfassend:
Einen Messaufnehmer (100) nach einem der vorigen Ansprüche;
eine elektronische Mess-/Betriebsschaltung (210), wobei die elektronische Mess-/Betriebsschaltung dazu eingerichtet ist, die Sensoren (10) und den Erreger (11) zu betreiben, und mittels elektrischer Verbindungsleitungen (220) mit diesen verbunden ist,
wobei die elektronische Mess-/Betriebsschaltung weiter dazu eingerichtet ist, Durchflussmesswerte und/oder Dichtemesswerte zu ermitteln und bereitzustellen,
wobei das Messgerät insbesondere ein Elektronikgehäuse (230) zum Behausen der elektronischen Mess-/Betriebsschaltung aufweist.

## Claims

1. Sensor (100) of a measuring device (200) designed to measure a mass flow or a density of a medium flowing through at least one measuring tube of the sensor, said sensor comprising:
the at least one measuring tube (110) with an inlet (111) and an outlet (112), wherein the tube is designed to conduct the medium between the inlet and the outlet;
at least an exciter (11), which is designed to make the at least one measuring tube vibrate; and at least two sensors (10), which are designed to measure the deflection of the vibrations of the at least one measuring tube,
wherein the exciter and the sensors each have a coil unit (1) and a magnet unit (9), wherein the magnet units can be moved in relation to the respective coil unit, and wherein the magnet unit and the coil unit of an exciter or a sensor interact with one another by means of magnetic fields,
wherein the sensor comprises a support body (120), wherein said support body is designed to hold the at least one measuring tube,
wherein the coil unit (1) comprises a printed circuit board (2) with at least a printed circuit board layer (3), wherein each printed circuit board layer comprises a first side surface (3.1) and a second side surface (3.2) parallel to the first side surface,
wherein the coil unit (1) has at least a coil (4), wherein the coil is formed at least in sections by means of an electrically conductive conductor path (4.3), wherein the coil is arranged on the first side surface and/or on the second side surface of a printed circuit board layer,
wherein the at least one coil has a first coil end (4.1) and a second coil end (4.2),
wherein at least a first coil end and at least a second coil end are each connected to a contact (5),
wherein the at least one coil has, in each case, a winding area (WB) and a central area (Z) without windings, wherein the central area of a coil has a rectangular shape with opposing first sides (S1) and with opposing second sides (S2),
wherein the first sides have a first side length and the second sides have a second side length, wherein the rectangular shape of the central area has a first side median (SH1) associated with the first side and a second side median (SH2) associated with the second side,
wherein the electric conductor path has a conductor path width (LB) of at least 30 micrometers,
wherein the coil is designed to detect a magnetic field that varies over time, produced by a relative movement of a magnet of a magnet unit of the sensor,
**characterized in that**
a ratio of the first side length to the second side length is greater than 3.25 and particularly greater than 3.5 and preferably greater than 3.75,
wherein a deflection of the vibrations of the measuring tube has a vibration direction parallel to the second side of the rectangular shape of the central area.

2. Sensor as claimed in Claim 1,
wherein the conductor path has a conductor path median line (4.4),
wherein neighboring coil windings have a winding distance (WA) in relation to the conductor path median line,
wherein the winding distance is less than the twice the conductor path width by a factor F,
wherein F is at least equal to 1, and particularly at least equal to 1.2 and preferably at least equal to 1.4.

3. Sensor as claimed in Claim 1 or 2,
wherein an outer contour of the winding area has a rectangular shape.

4. Sensor as claimed in one of the previous claims,
wherein the at least one coil has, in each case, at least 4, and particularly at least 5, and preferably at least 6 windings,
and/or wherein a total number of windings of the at least one coil is at least 65, and particularly at least 70, and preferably at least 72.

5. Sensor as claimed in one of the previous claims,
wherein multiple printed circuit board layers (3) each have a coil with a first coil end and a second coil end,
wherein the coils are connected in series and/or in parallel to one another,
wherein the coils of different printed circuit board layers generate magnetic fields with constructive interference when an electrical direct voltage is applied.

6. Sensor as claimed in Claim 5,
wherein the first coil ends are connected by means of a first through-connection (7.1), and the second coil ends are connected by means of a second through-connection (7.2),
or wherein neighboring coils are connected by means of one of their respective coil ends via a through-connection in each case, wherein, in each case, one end of the outer coils is connected to a contact element (5) in each case.

7. Sensor as claimed in one of the previous claims,
wherein the first side length is at least 3 millimeters and particularly at least 4 millimeters and preferably at least 5 millimeters and/or wherein the first side length is at most 20 millimeters and particularly at most 15 millimeters and preferably at most 12 millimeters,
and/or
wherein the second side length is at least 0.3 millimeters and particularly at least 0.5 millimeters and preferably at least 1 millimeter and/or wherein the second side length is at most 5 millimeters and particularly at most 4 millimeters and preferably at most 3 millimeters.

8. Sensor as claimed in Claim 7,
wherein the magnet unit of a sensor or of an exciter has, on at least one measuring tube, at least a mounted magnet (9.1) with at least one magnet side surface facing towards the coil unit, wherein the magnet side surface is delimited by two opposing first magnet edges and two opposing second magnet edges,
wherein, when the measuring tube is in the rest position, the magnet side surface projects onto a first side surface of a printed circuit board layer, and the second magnet edges projects into the central area along a vibration direction of the measuring tube parallel to the second side, wherein a first magnet edge facing towards the second side median is spaced at a distance from the second side median, wherein the measuring tube is designed to vibrate with a vibration amplitude, wherein the spacing (B) is greater than a semi-vibration amplitude,
wherein the first magnet edge facing towards the second side median extends particularly parallel to the second side median.

9. Sensor as claimed in Claim 8,
wherein the side surface of the magnet is rectangular.

10. Sensor as claimed in Claim 8 or 9,
wherein, when the measuring tube is in a rest position, the second magnet edge fully covers over the winding area along the second magnet edge.

11. Sensor as claimed in one of the Claims 8 to 10,
wherein a length of the first magnet edge is at least 5 %, particularly at least 10 % and preferably at least 20 % smaller than the first side length,
or wherein a length of the first magnet edge is at least 50 micrometers, particularly at least 75 micrometers and preferably at least 100 micrometers smaller than the first side length,
and wherein the first magnet edge facing towards the second side median is spaced at a distance from the winding area in the projection in a direction parallel to the second side median.

12. Sensor as claimed in one of the Claims 8 to 11,
wherein the magnet side surface is perpendicular to the coil axis and is located at a distance of at least 20 micrometers, particularly at least 40 micrometers and preferably at least 50 micrometers from the printed circuit board, and/or
wherein the magnet side surface has a distance in relation to the printed circuit board of 200 micrometers at maximum, particularly of 150 micrometers at maximum and preferably of 120 micrometers at maximum.

13. Sensor as claimed in one of the Claims 8 to 12,
wherein the at least one magnet arranged on a measuring tube forms a ring with a closed end (9.5) and an open end (9.6), wherein the open end is designed to surround an associated coil unit and to expose the coil unit to a magnetic field that is parallel to a coil axis.

14. Sensor as claimed in one of the Claims 8 to 13,
wherein the sensor comprises at least a pair of measuring tubes, wherein the measuring tubes of the pair are designed to vibrate in relation to one another,
wherein at least one sensor and/or at least one exciter comprises, in each case, a coil unit with a coil and a magnet unit with at least two magnets,
wherein, in each case, at least one magnet is secured to a measuring tube of the measuring tube pair.

15. Measuring device comprising:
a sensor (100) as claimed in one of the previous claims;
an electronic measuring/operating circuit (210), wherein the electronic measuring/operating circuit is designed to operate the sensors (10) and the exciter (11), and wherein the circuit is connected to them by means of electrical connection lines (220),
wherein the electronic measuring/operating circuit is further designed to determine and provide flow measured values and/or density measured values,
wherein the measuring device particularly has an electronics housing (230) designed to accommodate the electronic measuring/operating circuit.

## Revendications

1. Capteur (100) d'un appareil de mesure (200) destiné à mesurer un débit massique ou une densité d'un produit s'écoulant à travers au moins un tube de mesure du capteur, lequel capteur comprend :
l'au moins un tube de mesure (110) avec une entrée (111) et une sortie (112), lequel tube est conçu pour guider le produit entre l'entrée et la sortie ;
au moins un excitateur (11), lequel est conçu pour faire vibrer l'au moins un tube de mesure ; et au moins deux capteurs (10), lesquels sont conçus pour mesurer la déviation des vibrations d'au moins un tube de mesure,
l'excitateur ainsi que les capteurs présentant chacun un dispositif de bobine (1) et chacun un dispositif magnétique (9), les dispositifs magnétiques pouvant être déplacés par rapport au dispositif de bobine respectif, et le dispositif magnétique et le dispositif de bobine d'un excitateur ou d'un capteur interagissant entre eux au moyen de champs magnétiques,
le capteur comprenant un corps de support (120), lequel corps de support est conçu pour maintenir l'au moins un tube de mesure,
le dispositif de bobine (1) comprenant une carte de circuit imprimé (2) avec au moins une couche de carte de circuit imprimé (3), chaque couche de carte de circuit imprimé comprenant une première surface latérale (3.1) et une deuxième surface latérale (3.2) parallèle à la première surface latérale,
le dispositif de bobine (1) présentant au moins une bobine (4), la bobine étant réalisée au moins par sections au moyen d'une piste électriquement conductrice (4.3), la bobine étant disposée sur la première surface latérale et/ou sur la deuxième surface latérale d'une couche de carte de circuit imprimé,
l'au moins une bobine présentant respectivement une première extrémité de bobine (4.1) et respectivement une deuxième extrémité de bobine (4.2), au moins une première extrémité de bobine ainsi qu'au moins une deuxième extrémité de bobine étant chacune reliées à un contact (5),
l'au moins une bobine présentant chacune une zone d'enroulement (WB) et une zone centrale (Z) sans enroulements, la zone centrale d'une bobine présentant une forme rectangulaire avec des premiers côtés (S1) opposés et avec des deuxièmes côtés (S2) opposés, les premiers côtés présentant une première longueur de côté et les deuxièmes côtés présentant respectivement une deuxième longueur de côté, la forme rectangulaire de la zone centrale ayant une première bissectrice de côté (SH1) associée au premier côté et une deuxième bissectrice de côté (SH2) associée au deuxième côté,
la piste électrique présentant une largeur de piste (LB) d'au moins 30 micromètres,
la bobine étant conçue pour détecter un champ magnétique variant dans le temps, produit par un mouvement relatif d'un aimant d'un dispositif magnétique du capteur,
**caractérisé en ce que**
un rapport entre la première longueur de côté et la deuxième longueur de côté est supérieur à 3,25 et notamment supérieur à 3,5 et de préférence supérieur à 3,75, une déviation des vibrations du tube de mesure présentant une direction de vibration parallèle au deuxième côté de la forme rectangulaire de la zone centrale.

2. Capteur selon la revendication 1,
pour lequel la piste conductrice présente une ligne médiane de piste conductrice (4.4),
les enroulements de bobine voisines présentant un espacement des enroulements (WA) par rapport à la ligne médiane de la piste conductrice,
l'espacement des enroulements étant inférieur d'un facteur F à deux fois la largeur de la piste conductrice,
F étant au moins égal à 1, et notamment au moins égal à 1,2 et de préférence au moins égal à 1,4.

3. Capteur selon la revendication 1 ou 2,
pour lequel un contour extérieur de la zone d'enroulement présente une forme rectangulaire.

4. Capteur selon l'une des revendications précédentes,
pour lequel l'au moins une bobine comporte respectivement au moins 4, et notamment au moins 5, et de préférence au moins 6 enroulements,
et/ou pour lequel un nombre total d'enroulements de l'au moins une bobine est d'au moins 65, et notamment d'au moins 70, et de préférence d'au moins 72.

5. Capteur selon l'une des revendications précédentes,
pour lequel une pluralité de couches de cartes de circuits imprimés (3) présentent chacune une bobine avec une première extrémité de bobine et une deuxième extrémité de bobine,
les bobines étant connectées en série et/ou en parallèle les unes aux autres,
les bobines de différentes couches de circuits imprimés générant des champs magnétiques interférents par construction lors de l'application d'une tension électrique continue.

6. Capteur selon la revendication 5,
pour lequel les premières extrémités de bobine sont reliées au moyen d'un premier contact traversant (7.1), et les deuxièmes extrémités de bobine sont reliées au moyen d'un deuxième contact traversant (7.2),
ou pour lequel des bobines voisines sont reliées au moyen de l'une de leurs extrémités de bobine respectives par l'intermédiaire d'un contact traversant respectif, une extrémité de chacune des bobines extérieures étant reliée à un élément de contact respectif (5).

7. Capteur selon l'une des revendications précédentes,
pour lequel la première longueur de côté est d'au moins 3 millimètres et notamment d'au moins 4 millimètres et de préférence d'au moins 5 millimètres et/ou la première longueur de côté est d'au plus 20 millimètres et notamment d'au plus 15 millimètres et de préférence d'au plus 12 millimètres,
et/ou
pour lequel la deuxième longueur de côté est d'au moins 0,3 millimètre et notamment d'au moins 0,5 millimètre et de préférence d'au moins 1 millimètre et/ou la deuxième longueur de côté est d'au plus 5 millimètres et notamment d'au plus 4 millimètres et de préférence d'au plus 3 millimètres.

8. Capteur selon la revendication 7,
pour lequel le dispositif magnétique d'un capteur ou d'un excitateur présente, sur au moins un tube de mesure, au moins un aimant (9.1) monté avec au moins une surface latérale d'aimant tournée vers le dispositif de bobine, la surface latérale d'aimant étant délimitée par deux premiers bords d'aimant opposés et deux deuxièmes bords d'aimant opposés,
pour lequel, lorsque le tube de mesure est en position de repos, la surface latérale d'aimant, en projection sur une première surface latérale d'une couche de carte de circuit imprimé, les deuxièmes bords d'aimant font saillie dans la zone centrale le long d'une direction de vibration du tube de mesure parallèle au deuxième côté, un premier bord d'aimant faisant face à la deuxième bissectrice de côté étant espacé de la deuxième bissectrice de côté, le tube de mesure étant conçu pour vibrer avec une amplitude de vibration, l'espacement (B) étant supérieur à une demi-amplitude de vibration,
le premier bord d'aimant tourné vers la deuxième bissectrice de côté s'étendant notamment parallèlement à la deuxième bissectrice de côté.

9. Capteur selon la revendication 8,
pour lequel la surface latérale de l'aimant est rectangulaire.

10. Capteur selon la revendication 8 ou 9,
pour lequel, lorsque le tube de mesure est en position de repos, le deuxième bord d'aimant recouvre entièrement la zone d'enroulement le long du deuxième bord d'aimant.

11. Capteur selon l'une des revendications 8 à 10,
pour lequel une longueur du premier bord d'aimant est inférieure d'au moins 5 %, notamment d'au moins 10 % et de préférence d'au moins 20 % à la première longueur latérale,
ou pour lequel une longueur du premier bord d'aimant est inférieure d'au moins 50 micromètres, notamment d'au moins 75 micromètres et de préférence d'au moins 100 micromètres, à la première longueur latérale,
et pour lequel le premier bord d'aimant tourné vers la deuxième bissectrice de côté est espacé de la zone d'enroulement en projection dans une direction parallèle à la deuxième bissectrice de côté.

12. Capteur selon l'une des revendications 8 à 11,
pour lequel la face latérale de l'aimant est perpendiculaire à l'axe de la bobine et se trouve à une distance d'au moins 20 micromètres, notamment d'au moins 40 micromètres et de préférence d'au moins 50 micromètres de la carte de circuit imprimé, et/ou
la surface latérale de l'aimant présente une distance par rapport à la carte de circuit imprimé de 200 micromètres au maximum, notamment de 150 micromètres au maximum et de préférence de 120 micromètres au maximum.

13. Capteur selon l'une des revendications 8 à 12,
pour lequel l'aimant disposé au moins sur un tube de mesure forme un anneau avec une extrémité fermée (9.5) et une extrémité ouverte (9.6), l'extrémité ouverte étant conçue pour entourer un dispositif de bobine associé et pour alimenter le dispositif de bobine avec un champ magnétique parallèle à un axe de bobine.

14. Capteur selon l'une des revendications 8 à 13,
pour lequel le capteur comprend au moins une paire de tubes de mesure, les tubes de mesure de la paire étant conçus pour vibrer l'un par rapport à l'autre,
au moins un capteur et/ou au moins un excitateur comprenant chacun un dispositif de bobine avec une bobine et un dispositif magnétique avec chacun au moins deux aimants,
au moins un aimant étant fixé à chaque tube de mesure de la paire de tubes de mesure.

15. Appareil de mesure comprenant :
un capteur (100) selon l'une des revendications précédentes ;
un circuit électronique de mesure/d'exploitation (210), le circuit électronique de mesure/d'exploitation étant conçu pour exploiter les capteurs (10) et l'excitateur (11), et lequel circuit est relié à ceux-ci au moyen de lignes de liaison électriques (220),
le circuit électronique de mesure/d'exploitation étant en outre conçu pour déterminer et mettre à disposition des valeurs mesurées de débit et/ou des valeurs mesurées de densité,
l'appareil de mesure comprenant notamment un boîtier électronique (230) destiné à loger le circuit électronique de mesure/d'exploitation.
